# EUROPÄISCHE PATENTANMELDUNG

(11) **EP 0 576 741 A1**
(43) Veröffentlichungstag der Anmeldung: **05.01.1994**
(21) Anmeldenummer: 92250173.9
(22) Anmeldetag: 02.07.1992
(51) Int. Cl.: B29C 45/82

(54) **Hydraulische Schaltungsanordnung zur Messung von Förderstromveränderungen am Spritzzylinder bei hydraulisch angetriebenen Spritzgiessmaschinen**

(71) Anmelder: Hummel, Erhard, D-09120 Chemnitz (DE)
(72) Erfinder: Fechner, Olav, Dipl.-Ing, O-9044 Chemnitz (DE); Hummel, Erhard, Dipl.-Ing., O-9051 Chemnitz (DE); Schneider, Hans, Dipl.-Ing., O-9122 Adorf (DE)

(57) **Zusammenfassung**

Durch die hydraulische Schaltungsanordnung 5 wird ein Signal für die Steuerung des nächsten Arbeitsschrittes bei Spritzgießmaschinen gemessen. Es wird die Erfassung einer starken Reduzierung der Antriebsölmenge mittels Druckdifferenzmessung ohne Anpaß- und Korrekturarbeiten für einen weitgefaßten Ölstrombereich ermöglicht.

Die hydraulische Schaltungsanordnung 5 ist vorzugsweise in der Vorlaufleitung 12 des Spritzzylinders 11 angeordnet. Sie besteht aus einem beim Einspritzvorgang in Strömungsrichtung sich öffnenden Druckvorspannventil 6, zu dem parallel eine Drossel 8 geschaltet ist. Weiterhin ist parallel zum Druckvorspannventil 6 eine Druckdifferenz-Meßeinrichtung 9 angeordnet.

## Beschreibung

Die Erfindung bezieht sich auf eine hydraulische Schaltungsanordung zur Messung von Förderstromveränderungen am Spritzzylinder bei hydraulisch angetriebenen Spritzgießmaschinen, bei denen für die Formfüllphase eine Spritzkraftbegrenzung vorgegeben ist.

Die Steuerung des Ablaufes nacheinander folgender Arbeitszyklen ist für die Qualität der hergestellten Werkstücke und für die Wirtschaftlichkeit der Herstellung von erheblicher Bedeutung. Die Meßwerterfassung ist zur Darstellung der Eingangswerte für die Steuerung wesentlich am Erfolg beteiligt.

Im EP 91250276.2 ist ein Verfahren zur Meßwerterfassung und Steuerung von hydraulisch angetriebenen Spritzgießmaschinen und Pressen, bei denen für den Antriebsölstrom eines oder mehrerer Arbeitsglieder ein Begrenzungsdruck vorgesehen ist, beschrieben. Dort wird in einem Leitungsabschnitt zwischen dem Ort der Förderstromreduzierung während der Druckbegrenzung und dem Arbeitsglied über eine während der Druckbegrenzung unveränderliche Drosselstrecke die Druckdifferenz erfaßt. Ein Druckdifferenzwert wird bei Beginn der Reduzierung der Antriebsölstrommenge erfaßt. Die Zeitdauer bis zum Erreichen eines zweiten Druckdifferenzwertes, der größer oder gleich einem Druckdifferenzwert Null ist und einer weiteren Reduzierung der Antriebsölstrommenge entspricht, wird zur Steuerung der im nachfolgenden Arbeitszyklus vorgegebenen Parameter und/oder der Druckdifferenzwert Null wird zur Steuerung des nachfolgenden Arbeitsschrittes verwendet. Die Druckdifferenzwerte werden als digitale Signale dargestellt und als Maß für den momentanen Leistungsbedarf am Arbeitsglied ausgewertet.
Die zu diesem Verfahren beschriebene hydraulische Schaltungsanordnung geht davon aus, daß während der Druckbegrenzung eine unveränderliche Drosselstrecke, in der sich, je nach fließendem Ölstrom, die zu messende Druckdifferenz ausbildet, vorhanden ist. Für hydraulische Schaltungen, bei denen die Bewegungsgeschwindigkeit und der Begrenzungsdruck mittels eines Regelventiles oder einer druck- und stromgesteuerten Regelpumpe gesteuert werden, ist ein zusätzliches, elektrisch abhängig von der Bewegungsgeschwindigkeitsvorgabe steuerbares Drosselventil erforderlich. Der materielle und steuerprogrammtechnische Aufwand ist dabei erheblich. Diese Lösung stellt eine auf die vorhandene Einrichtung zugeschnittene Lösung dar und erfordert einen Eingriff in die elektrische Maschinensteuerung. Für die Nachrüstung bereits im Einsatz befindlicher Spritzgießmaschinen ist diese Lösung deshalb nicht verwendbar. Weiterhin setzt die beschriebene Schaltungsanordnung voraus, daß bei Spritzdruckbegrenzung über das Drosselventil eine Ölstromverminderung auftritt. In einer Reihe bekannter Spritzgießmaschinen geschieht die Druckbegrenzung hinter dem Drosselventil, wodurch bei Druckbegrenzung keine Ölstromverminderung erfolgt. Hier muß eine zusätzliche Einrichtung dem Ort der Druckbegrenzung nachgeschaltet werden.

Hier will die Erfindung Abhilfe schaffen. Die Erfindung, wie sie in den Anspüchen gekennzeichnet ist, löst die Aufgabe, eine hydraulische Schaltungsanordung zu schaffen, bei der ein Eingriff in die elektrische Maschinensteuerung nicht erforderlich ist und die zur Steuerung des nächsten Arbeitsschrittes die Erfassung einer starken Reduzierung der Antriebsölmenge mittels Druckdifferenzmessung ohne Anpaß- und Korrekturarbeiten für einen weitgefaßten Ölstrombereich ermöglicht. Der Aufwand soll deutlich minimiert werden.

Dadurch werden folgende Vorteile erreicht:
Es wird bei kraftgeregelten Bewegungsvorgängen für den Zustand "Bewegung ist nahezu beendet" die Ausgabe eines Schaltsignales durch eine Druckdifferenzmessung über eine in die hydraulische Maschinensteuerung einfügbare hydraulische Schaltungsanordnung möglich.
Die hydraulische Schaltungsanordnung ist sowohl in den Zufluß als auch in den Abfluß des Spritzzylinders einbaubar. Bei Veränderungen des Förderstromsollwertes oder der Begrenzungsdruckhöhe ist keine Veränderung an der hydraulischen Schaltungsanordnung erforderlich.
Die hydraulische Schaltungsanordnung ist als selbständiges, von der Maschinensteuerung unabhängig arbeitendes System zur Ereignismeldung bei der starken Leistungsbedarfsminderung allen kraftbegrenzten hydraulischen Arbeitsgliedern zuordenbar.
Eine direkte digitale Signalausgabe ermöglicht sehr kurze Reaktionszeiten zwischen Ereigniseintritt und Ereignismeldung.

Nachfolgend wird die Erfindung an zwei Ausführungsbeispielen näher erläutert. In der Zeichnung zeigen:
- Fig. 1: die in der Vorlaufleitung des Spritzzylinders angeordnete hydraulische Schaltungsanordnung und
- Fig. 2: die in der Rücklaufleitung des Spritzzylinders angeordnete hydraulische Schaltungsanordnung.

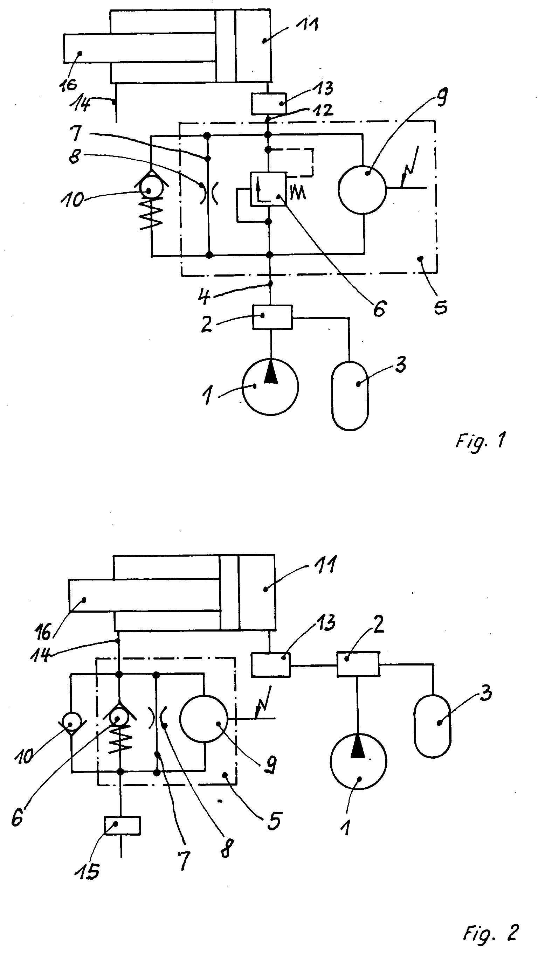

In Fig. 1 ist eine hydraulische Regelpumpe 1 über einen Steuerblock 2 mit einem Druckspeicher 3 verbunden. Vom Steuerblock 2 führt eine Leitung 4 zur hydraulischen Schaltungsanordnung 5. Diese besteht aus einem Druckvorspannventil 6, zu dem parallel in einer by-pass-Leitung 7 eine Drossel 8 angeordnet ist. Ebenfalls parallel zum Druckvorspannventil 6 ist eine Druckdifferenz-Meßeinrichtung 9 geschaltet. Parallel zur hydraulischen Schaltungsanordnung 5 ist ein dieses rückwärts umgehendes Rückschlagventil 10 angeordnet. In der vom Rückschlagventil 10 und der hydraulischen Schaltungsanordnung 5 zur Vorlaufseite des Spritzzylinders 11 führenden Leitung 12 ist ein die Spritzzylindersteuerung enthaltender Steuerblock 13 angeordnet. Die Rücklaufleitung 14 des Spritzzylinders 11 ist in an sich bekannter Weise ausgeführt.

In Fig. 2 ist ebenfalls eine Regelpumpe 1 angeordnet, die über einen Steuerblock 2 mit einem Druckspeicher 3 verbunden ist. Der Steuerblock 2 ist mit einem weiteren die Spritzzylindersteuerung enthaltenden Steuerblock 13 verbunden und dieser wiederum mit der Vorlaufseite des Spritzzylinders 11. In der Rücklaufleitung 14 des Spritzyylinders 11 ist die hydraulische Schaltungsanordnung 5 angeordnet, die durch ein Rückschlagventil 10, welches parallel geschaltet ist, umgangen wird. Der hydraulischen Schaltungsanordnung 5 ist ein Steuerblock 15 nachgeschaltet, der die Schaltventile für den Schneckenrückzug enthält.

Die Arbeitsweise ist folgende:
Während des Einspritzvorganges wird von der Pumpe 1 und/oder dem Speicher 3 über den Steuerblock 13 der Spritzzylinder 11 mit einem Förderstrom beaufschlagt. Dabei wird die Geschwindigkeit des Spritzkolbens 16 gemessen und über die im Steuerblock 13 befindlichen Steuerelemente zur Realisierung der gewünschten Geschwindigkeit geregelt. Gleichzeitig wird der Druck im Vorlaufraum gemessen, der Meßwert mit einem Sollwert verglichen und ab Erreichen der Sollwert-Istwert-übereinstimmung der Drosselspalt im Steuerblock 13 so geregelt, daß der Druck nicht überschritten wird. Bei vollständig gefülltem und komprimiertem Forminnenraum hat sich das im Steuerblock 13 befindliche elektrisch verstellbare Drosselventil vollständig geschlossen. Damit schließt sich das Druckvorspannventil 6, und es tritt über die Drossel 8 der Druckausgleich zwischen dem Eingang und dem Ausgang des Druckvorspannventils 6 ein. Durch die Druckdifferenz-Meßeinrichtung 9 wird bei diesem Druckausgleich ein Signal ausgegeben. Dieses Signal dient als Umschaltsignal von Spritzen auf Nachdrücken. Ist im Steuerblock 13 ein Druckbegrenzungsventil für den Spritzdruck vorhanden und ein Anordnen der hydraulischen Schaltungsanordnung 5 zwischen dem Steuerblock 13 und dem Spritzzylinder 11 nicht möglich, so ist die Schaltung der hydraulischen Schaltungsanordnung 5 auch in die Rücklaufleitung 14 des Spritzzylinders 11 möglich. Dabei fließt der im Spritzzylinder 11 verdrängte Ölstrom über das Druckvorspannventil 6 und über die Drossel 8. Bei nahezu stillstehendem Spritzkolben 16 schließt sich das Druckvorspannventil 6. Über die Drossel 8 tritt der Druckausgleich zwischen dem Eingang und dem Ausgang des Druckvorspannventils 6 ein. Dabei führt der nahezu erfolgte Druckausgleich zur Ausgabe eines Signals durch die Druckdifferenz-Meßeinrichtung 9.
Die dem Spritzzylinder 11 abflußseitig zugeordnete Schaltungsanordnung 5 hat unter anderem folgende Vorteile gegenüber der zuflußseitigen Zuordnung der hydraulischen Schaltungsanordnung 5:
Der durch die hydraulische Schaltungsanordnung 5 fließende Ölstrom ist wesentlich geringer. Die hydraulische Schaltungsanordnung 5 arbeitet nur im niedrigen Druckbereich.

Das Druckvorspannventil 6 kann als federvorgespanntes Rückschlagventil ausgeführt sein. Weiterhin kann die in der by-pass-Leitung 7 zum Druckvorspannventil 6 angeordnete Drossel 8 auch als Drosselstrecke mit einer vergleichsweise zur Nennweite des Druckvorspannventiles 6 engen Drosselbohrung ausgeführt sein. Es liegt auch im Rahmen der Erfindung, die Druckdifferenz-Meßeinrichtung 9 als ein in einem Gehäuse geführten, federbelasteten, mit den Drücken vor bzw. hinter dem Druckvorspannventil beaufschlagten Kolben auszuführen, der bei Ölstromfluß über das Druckvorspannventil sich in der gespannten Federlage befindet und bei annäherndem Druckausgleich vor und hinter dem Druckvorspannventil mittels der Feder in seiner Ruhelage fixiert ist. Zur Erfassung der Ruhelage eines derartigen Kolbens ist als Meßsystem ein Näherungsschalter angeordnet.

## Patentansprüche

1. Hydraulische Schaltungsanordnung zur Messung von Förderstromveränderungen am Spritzzylinder bei hydraulisch angetriebenen Spritzgießmaschinen, bei denen für die Formfüllphase eine Spritzkraftbegrenzung vorgegeben ist,
dadurch gekennzeichnet,
daß in der Vorlaufleitung (12) des Spritzzylinders (11) ein beim Einspritzvorgang in Strömungsrichtung öffnendes Druckvorspannventil (6) angeordnet ist, über das eine in einer by-pass-Leitung (7) liegende Drossel (8) angeordnet ist, zu der parallel eine Druckdifferenz-Meßeinrichtung (9) geschaltet ist.

2. Hydraulische Schaltungsanordnung nach Anspruch 1,
gekennzeichnet durch
die Anordnung in der Rücklaufleitung (14) des Spritzzylinders (11).

3. Hydraulische Schaltungsanordnung nach den Ansprüchen 1 und 2,
dadurch gekennzeichnet,
daß die Druckdifferenz-Meßeinrichtung (9) mindestens eine digitale Signalausgabe hat.
